# EUROPÄISCHE PATENTSCHRIFT

(11) **EP 3 568 666 B1**
(45) Veröffentlichungstag und Bekanntmachung des Hinweises auf die Patenterteilung: **03.11.2021**
(21) Anmeldenummer: 18700712.5
(22) Anmeldetag: 04.01.2018
(51) Int. Cl.: G01B 11/24, F16D 65/092

(54) **VERWENDUNG EINES BERÜHRUNGSLOS ARBEITENDEN OPTISCHEN LASER-TRIANGULATIONSVERFAHRENS ZUR ERMITTLUNG VON GEOMETRISCHEN EIGENSCHAFTEN EINES BREMSBELAGS**
USE OF A CONTACTLESSLY WORKING OPTICAL LASER TRIANGULATION METHOD FOR DETERMINING GEOMETRIC PROPERTIES OF A BRAKE LINING
UTILISATION D'UN PROCÉDÉ DE TRIANGULATION PAR LASER OPTIQUE SANS CONTACT POUR DÉTERMINER DES CARACTÉRISTIQUES GÉOMÉTRIQUES D'UNE GARNITURE DE FREINAGE

(30) Priorität: 12.01.2017 DE 102017100539
(43) Veröffentlichungstag der Anmeldung: 20.11.2019
(73) Patentinhaber: KNORR-BREMSE Systeme für Schienenfahrzeuge GmbH, 80809 München (DE)
(72) Erfinder: KLEEBERGER, Peter, 82178 Puchheim (DE)
(86) Internationale Anmeldenummer: PCT/EP2018/050169
(87) Internationale Veröffentlichungsnummer: WO 2018/130451

(56) Entgegenhaltungen:
- DE-A1- 4 436 457
- DE-C1- 19 709 962
- Sick Ag: "Sick product catalog 2014/2015", , 31. Dezember 2015 (2015-12-31), Seiten 1-124, XP055455104, Gefunden im Internet: URL:https://www.sick.com/media/docs/2/02/3 02/Product_catalog_Vision_en_IM0050302.PDF [gefunden am 2018-02-28]

## Beschreibung

Die Erfindung betrifft eine Verwendung eines berührungslos arbeitenden optischen Laser-Triangulationsverfahrens gemäß Anspruch 1. Eine derartige Verwendung ist aus Sick AG: "Sick product catalog 2014/2015", 31. Dezember 2015, Seiten 1-124, XP055455104 bekannt.

Ein in WO2004/085957 A1 beschriebenes Verfahren und dient dort zur Ermittlung von Verschleiß an Radprofilen von Schienenfahrzeugrädern während der Vorbeifahrt des Schienenfahrzeugs.

Der vorliegenden Erfindung liegt die Aufgabe zugrunde, eine neue und vorteilhafte Verwendung des berührungslos arbeitenden optischen Laser-Triangulationsverfahrens anzugeben.

Diese Aufgabe wird erfindungsgemäß durch die Merkmale von Anspruch 1 gelöst. Vorteilhafte Weiterbildungen der Erfindung sind Gegenstand der beigefügten Unteransprüche.

### Offenbarung der Erfindung

Bei mit Bremsscheiben von Scheibenbremsen von Schienenfahrzeugen zusammenwirkenden Bremsbelägen existieren Ausführungen, bei denen Reibelemente eines Bremsbelags Kugelsegmente aufweisen, welche mit komplementären Kugelpfannen einer Trägerplatte oder eines Trägerblech über Spannfedern gegeneinander schwenk- und lösbar verspannt sind. Dann können zum einen einzelne Reibelemente eines Bremsbelags bei unzulässigem Verschleiß ausgewechselt werden.

Bei einer ersten, z.B. in DE 197 09 962 C1 beschriebenen Ausführung werden im gelösten Zustand der Scheibenbremse die Kugelsegmente der Reibelemente durch die Vorspannung der Spannfedern in den Kugelpfannen der Trägerplatte oder des Trägerblechs spiel- und klapperfrei gehalten. Während des Zuspannens der Scheibenbremse übernimmt die Zuspannkraft des die Trägerplatte tragenden Belaghalters die Fixierung der Kugelsegmente einzelnen Reibelemente in den zugeordneten Kugelpfannen der Trägerplatte. Die Krümmungsradien der Kugelpfannen und der Kugelsegmente sind so ausgebildet, dass die Resultierende aus Reibkraft und Anpresskraft innerhalb der Kugelkontaktfläche liegt. Durch die kugelige, federverspannte und schwenkbare Anbindung der Reibelemente an der Trägerplatte können sich die Reibflächen der Reibelemente während des Zuspannens der Scheibenbremse an die Oberfläche der Bremsscheibe anschmiegen, wodurch kleine Unebenheiten ausgeglichen werden können. Hierdurch ist ein verbessertes Tragbild erzielbar und eine Bildung von "hot spots" wird vermieden.

Bei einer zweiten, z.B. in DE 44 36 457 A1 beschriebenen Ausführung sind eine Trägerplatte, mehrere Trägerbleche und mehrere austauschbare Reibelemente vorhanden, wobei mehrere Reibelemente über Kugelsegment/Kugelpfannenpaarungen direkt an jeweils einem Trägerblech schwenkbar gehalten sind und mehrere Trägerbleche mit an ihnen schwenkbar gehaltenen Reibelementen mit der Trägerplatte verbunden sind.

Durch die Art der Befestigung ist daher infolge der Federvorspannung eine klapperfreie Führung der Reibelemente an der Trägerplatte bzw. am Trägerblech geschaffen, die kugelige Anbindung vermittelt ein besseres Tragbild und es ist prinzipiell eine einfachere Möglichkeit der Montage bzw. Demontage der einzelnen Reibelemente gegeben. Die vereinfachte Montage und Demontage gestattet es auch, Trägerplatten bzw. Trägerbleche mehrfach zu verwenden.

Bei der Montage insbesondere solcher Bremsbeläge kann es aufgrund von Montagefehlern zu Fehlmontagen kommen, die nicht sofort visuell erkannt werden können und die später im Betrieb zu einem Verlust eines oder mehrerer Reibelemente führen können. Üblicherweise wird heute nach der Montage eines Bremsbelags und vor einer erstmaligen Inbetriebnahme eines Bremsbelags dieser daher durch Fertigungspersonal visuell überprüft.

Jedoch sind anhand einer visuellen Überprüfung der Bremsbeläge durch Fertigungspersonal nicht alle Fehler zuverlässig erkennbar, weil eine solche visuelle Inspektion zu grob ist und nicht alle Details erfasst und zudem in der Regel nur zweidimensional ist, d.h., dass insbesondere Fehler senkrecht zur Bildebene nicht erfasst werden. Außerdem kann die visuelle Überprüfung auch nicht Fertigungsabweichungen bei den zu montierenden Komponenten erkennen. Das Ziel der Überprüfung von Bremsbelägen vor einer erstmaligen Inbetriebnahme muss es daher sein, dass möglichst viele Fehlmontagen von Komponenten der Bremsbeläge zuverlässig zu erfassen.

Die Erfindung basiert auf einem berührungslos arbeitenden optischen Laser-Triangulationsverfahren zum Erfassen wenigstens einer geometrischen Eigenschaft von wenigstens einer Komponente der Komponenten eines Bremsbelags einer Scheibenbremseinrichtung eines Fahrzeugs vor einer Montage oder einer erstmaligen Inbetriebnahme des Bremsbelags und/oder der wenigstens einen Komponente der Komponenten des Bremsbelags in der Scheibenbremseinrichtung oder im Fahrzeug verwendet.

Die Komponenten des Bremsbelags können insbesondere Folgendes aufweisen:
a) gemäß einer ersten, z.B. in DE 197 09 962 C1 beschriebenen Ausführung eine Trägerplatte und mehrere austauschbare Reibelemente, wobei die Reibelemente direkt an der Trägerplatte schwenkbar gehalten sind, oder
b) gemäß einer zweiten, z.B. in DE 44 36 457 A1 beschriebenen Ausführung eine Trägerplatte, mehrere Trägerbleche und mehrere austauschbare Reibelemente, wobei mehrere Reibelemente direkt an jeweils einem Trägerblech beispielsweise schwenkbar gehalten sind und mehrere Trägerbleche mit an ihnen beispielsweise schwenkbar gehaltenen Reibelementen mit der Trägerplatte verbunden sind.

Ein solches berührungslos arbeitendes optisches Laser-Triangulationsverfahren gestattet heute eine genaue und zuverlässige Durchführung von berührungslosen Messungen mit Tiefenauflösungen bis in den Mikrometerbereich und ist daher besonders zur Erfassung von geometrischen Eigenschaften von wenigstens einer Komponente der Komponenten des Bremsbelags vor einer erstmaligen Inbetriebnahme des Bremsbelags in der Scheibenbremse geeignet.

Vor einer erstmaligen Inbetriebnahme des Bremsbelags oder vor der Montage in der Scheibenbremseinrichtung bedeutet, dass der mit dem berührungslos arbeitenden optischen Laser-Triangulationsverfahren untersuchte Bremsbelag noch nicht für den bestimmungsgemäßen Betrieb in der Scheibenbremse verwendet wurde und daher verschleißfrei ist. Denn es sollen mit dem berührungslos arbeitenden optischen Laser-Triangulationsverfahren die Art wenigstens einer Komponente der Komponenten des Bremsbelags erfasst werden, um beispielsweise durch einen Vergleich mit vorgegebenen Sollwerten oder Sollwertbereichen für die Art der wenigstens einen Komponente der Komponenten des Bremsbelags Montagefehler bei dem Bremsbelag zu detektieren. Im Falle eines detektierten Montagefehlers bei dem Bremsbelag wird dann ein Fehlersignal erzeugt.

Ein solcher Montagefehler besteht dann bei dem Bremsbelag darin, dass eine Komponente des Bremsbelags nicht mit den anderen Komponenten für eine gemeinsame Montage vorgesehen ist (Art der Komponente). Weiterhin sind unter geometrische Eigenschaften jegliche Eigenschaften zu verstehen, welche die Form (rund, eckig, zylindrisch, Radien etc.) und/oder die Lage (Fluchtung, Winkel, Abstand etc.) einer oder mehrerer Komponenten in Bezug zu einer anderen Komponente oder zu anderen Komponenten betreffen. Relative geometrische Eigenschaften einer oder mehrerer Komponenten in Bezug zu einer anderen Komponente oder zu anderen Komponenten können insbesondere aus in Bezug zu einer Referenz gewonnenen absoluten geometrischen Eigenschaften gewonnen werden.

Bei dem berührungslos arbeitenden optischen Laser-Triangulationsverfahren wird mittels eines Lasers ein Lichtpunkt auf die wenigstens eine Komponente der Komponenten des Bremsbelags in einer Beleuchtungsrichtung projiziert und das von der wenigstens einen Komponente der Komponenten des Bremsbelags in einer Beobachtungsrichtung reflektierte Licht auf einem Lichtaufnahmeelement abgebildet, wobei basierend auf dem Winkel zwischen Beleuchtungsrichtung und Beobachtungsrichtung durch Triangulation die Art der wenigstens einen Komponente der Komponenten des Bremsbelags erfasst wird. Auch kann bei dem Laser-Triangulationsverfahren der Laser-Lichtstrahl zu einem linienförmigen Lichtband, einem sogenannten Lichtschnitt, aufgeweitet werden. Zur Erfassung des reflektierten Lichtes kann dabei ein flächenförmiger Detektor eingesetzt werden, wie beispielsweise eine Videokamera. Die Auswertung erfolgt wiederum unter Zugrundelegung der Triangulation.

Die Verwendung des berührungslos arbeitenden optischen Laser-Triangulationsverfahrens erfolgt daher bevorzugt bei Bremsbelägen von Scheibenbremseinrichtungen von Schienenfahrzeugen. Unter einem Schienenfahrzeug ist ein spurgebundenes Fahrzeug zu verstehen, wie eine Lokomotive, ein Triebzug, ein Treibwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug. Eine Scheibenbremseinrichtung umfasst neben den Bremsbelägen wenigstens eine Bremsscheibe sowie weitere Komponenten wie z.B. einen Bremssattel für die Halterung der Bremsbeläge.

Durch die in den Unteransprüchen aufgeführten Maßnahmen sind vorteilhafte Weiterbildungen und Verbesserungen der Erfindung möglich.

Die erste oben genannte Ausführung von Bremsbelag, bei welcher das berührungslos arbeitende optische Laser-Triangulationsverfahren zur Erfassung der geometrischen Eigenschaften bevorzugt verwendet wird, ist dadurch gekennzeichnet, dass
a1) die Reibelemente mittels an ihrer Rückseite ausgebildeten Kugelsegmente schwenkbar in einer Kugelpfanne der Trägerplatte oder eines Trägerblechs angeordnet sind,
a2) die Kugelpfannen eine Bohrung aufweisen, welche in eine Bohrung der Trägerplatte oder des Trägerblechs übergeht,
a3) sich von den Kugelsegmenten der Reibelemente Befestigungszapfen erstrecken,
a4) die Befestigungszapfen jeweils eine das Reibelement in Richtung der Kugelpfanne verspannende Spannfeder tragen.

Die zweite oben genannte Ausführung, bei welcher das berührungslos arbeitende optische Laser-Triangulationsverfahren zur Erfassung der geometrischen Eigenschaften bevorzugt verwendet wird, ist dadurch gekennzeichnet, dass
b1) die Trägerbleche an ihrer von den Reibelementen weg weisenden Rückseite Kugelsegmente aufweist, welche schwenkbar in Kugelpfannen der Trägerplatte angeordnet sind,
b2) die Kugelpfannen der Trägerplatte jeweils eine Bohrung aufweisen, welche in eine Bohrung der Trägerplatte übergeht,
b3) von dem Kugelsegment eines Trägerblechs sich ein Zapfen erstreckt, welcher in die Bohrung der Trägerplatte eingreift.

Dann kann die wenigstens eine geometrische Eigenschaft der wenigstens einen Komponente der Komponenten des Bremsbelags durch eine der folgenden Eigenschaften gebildet werden: Die Art der Trägerbleche und/oder der Trägerplatte und/oder der Reibelemente und/oder der Befestigungszapfen und/oder der Zapfen und/oder der Spannfedern, wobei diese Aufzählung nicht abschließend ist.

Gemäß einer Weiterbildung kann das Erfassen der wenigstens einen geometrischen Eigenschaft der wenigstens einen Komponente der Komponenten des Bremsbelags in einem am Bremsbelag montierten Zustand der Komponente oder in einem Zustand der Komponente vor der Montage am Bremsbelag erfolgen.

### Zeichnung

Die Erfindung wird nachstehend anhand eines Ausführungsbeispielsunter Bezugnahme auf die beigefügte Zeichnung näher beschrieben. Es zeigen:
- Fig. 1: eine Teilschnittansicht einer ersten Ausführung des Bremsbelags mit Trägerplatte und mit an dieser direkt unter Federverspannung schwenkbar angelenkten Reibelementen;
- Fig. 2: eine in der Ansicht nach Fig.1 von unten gesehene Draufsicht auf eine Trägerplatte;
- Fig.3: eine Einzelansicht eines Reibelements der ersten Ausführung mit von diesem sich erstreckenden Befestigungszapfen;
- Fig.4: eine Schnittansicht des Reibelements nach Fig.3 unter Darstellung der Verbindung zwischen dem Reibmaterial des Reibelements und dem Kugelzapfen;
- Fig.5: eine der Fig.1 vergleichbare Teilschnittansicht eines Bremsbelags gemäß einer Variante der ersten Ausführung;
- Fig.6: eine von unten gesehene Draufsicht des in Fig.5 dargestellten Bremsbelags;
- Fig.7: eine Teilschnittansicht eines Bremsbelags gemäß einer zweiten Ausführung mit einer Trägerplatte und an der Trägerplatte verschwenkbar angeordneten Trägerblechen mit dort verschwenkbar angeordneten Reibelementen;
- Fig.8: eine Draufsicht auf ein Trägerblech mit beispielsweise drei Reibelementen;
- Fig.9: eine stark schematisierte Darstellung eines berührungslos arbeitenden optischen Laser-Triangulationsverfahrens gemäß einer bevorzugten Ausführungsform.

### Beschreibung der Ausführungsbeispiele

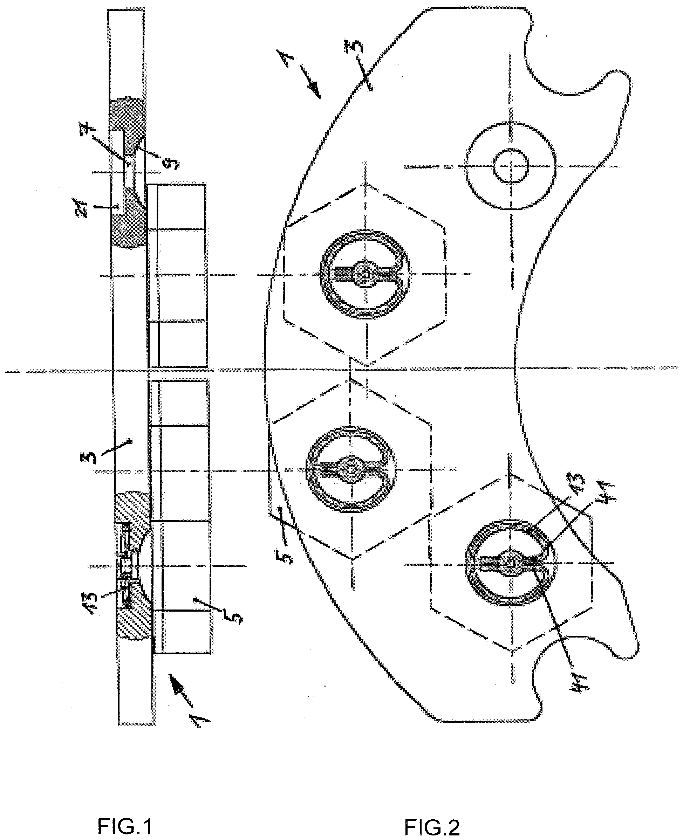

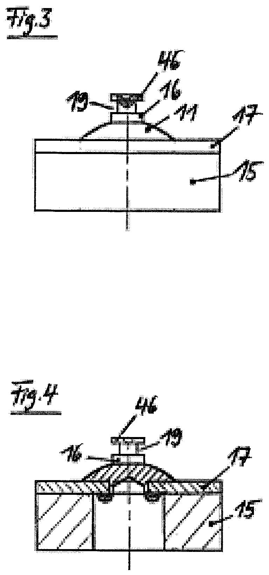

In **Fig.1** der Zeichnung ist ein Sinterbremsbelag 1 gemäß einer ersten Ausführung dargestellt, welcher im Wesentlichen aus einer Trägerplatte 3 und aus an der Trägerplatte direkt angeordneten Reibelementen 5 besteht. Die Reibelemente 5 sind aus Sinterwerkstoff gefertigt. Die Trägerplatte 3 weist entsprechend der gewählten Anordnung der Reibelemente 5 Bohrungen 7 auf, welche jeweils an ihrem der (nicht dargestellten) Bremsscheibe zugewandten Ende in eine Kugelpfanne 9 (Unterseite nach **Fig.1**) übergehen. In diesen Kugelpfannen 9 liegen Kugelsegmente 11 (**Fig.3**) der Reibelemente 5, welche mit Hilfe von Spannfedern 13 in nachfolgend beschriebener Weise mit der Trägerplatte 3 verbunden sind.

Gemäß **Fig.3** sind die Reibelemente 5 jeweils aus dem Reibbelagteil 15 und dem integrierten Kugelsegment 11 gebildet; letzteres trägt gleichzeitig den Befestigungszapfen 17. Das Kugelsegment 11 kann einteilig mit einem den Reibbelag 15 tragenden Trägerblech 17 gefertigt sein, es kann jedoch auch in der in **Fig.4** dargestellten Weise mit dem Trägerblech 17 vernietet werden. Der Befestigungszapfen 17 erstreckt sich in der aus **Fig.1** ersichtlichen Weise durch die Bohrung 7 der Trägerplatte; er weist eine Eindrehung 19 auf, in welche formschlüssig die Spannfeder 13 in nachfolgend beschriebener Weise eingerastet wird. Die Spannfeder 13 ist in der Lage, durch ihre Formelastizität das Reibelement gegen die Kugelpfanne 9 zu pressen. Hierbei liegt die Spannfeder in einer Vertiefung 21 der Trägerplatte 3. Infolge dieser flachen Bauart kann der Bremsbelag konventionell, wie bei UIC-Schwalbenschwanzführungen üblich, ausgeführt sein.

Die Spannfeder 13 ist gewölbt ausgebildet und wird in nachfolgend beschriebener Weise unter Erzeugung einer Vorspannung in die in **Fig.1** dargestellte Lage gebracht, derart, dass in ungebremstem Zustand das Reibelement 5 durch die Vorspannung der Spannfeder 13 in der Kugelpfanne 9 gehalten wird, und zwar spielfrei, d. h. ohne Klappern. Während des Bremsens übernimmt die Zuspannkraft des die Trägerplatte 3 tragenden Belaghalters die Fixierung der einzelnen Reibelemente 5 in ihren Kugelpfannen 9. Die Krümmungsradien der Kugelpfannen 9 und der Kugelsegmente 11 sind so ausgebildet, dass die Resultierende aus Reibkraft und Anpresskraft innerhalb der Kugelkontaktfläche liegt. Durch die kugelige, federverspannte Anbindung der Reibelemente 5 in der Trägerplatte 3 können sie sich Bereichen kleiner Unebenheiten der Bremsscheibe anpassen. Hierdurch ist ein verbessertes Tragbild erzielbar und die Bildung von "hot spots" wird vermieden.

Durch die Art der Befestigung ist infolge der Federvorspannung eine klapperfreie Führung der Reibelemente 5 an der Trägerplatte 3 geschaffen, die kugelige Anbindung vermittelt ein besseres Tragbild und es ist prinzipiell eine einfachere Möglichkeit der Montage bzw. Demontage der einzelnen Reibelemente 5 gegeben. Die vereinfachte Montage und Demontage gestattet es, die Trägerplatten 3 mehrfach zu verwenden.

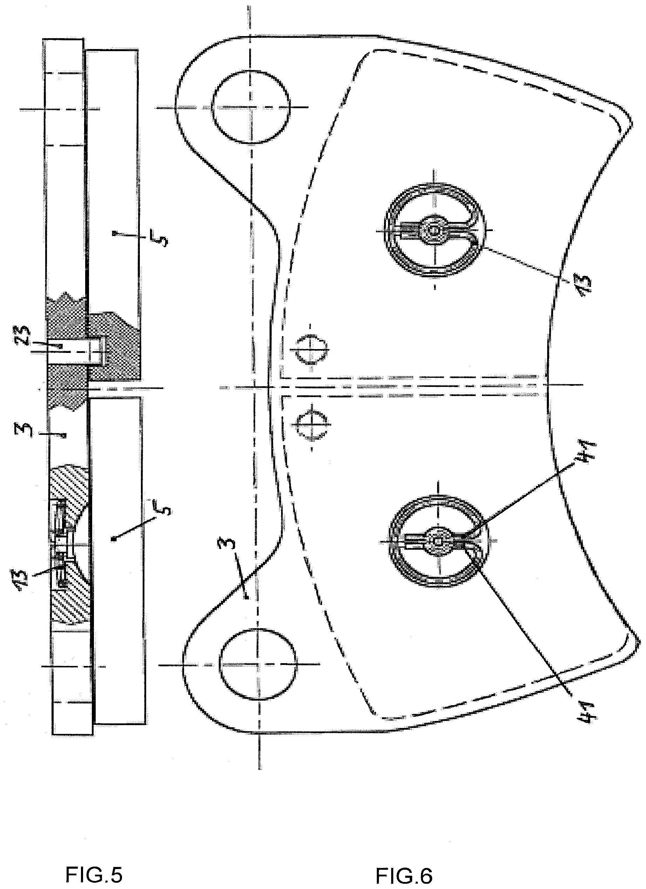

Varianten der beschriebenen Anordnung betreffen die geometrische Konfiguration der verwendeten Trägerplatten 3 und Reibelemente 5. So können Reibelement 5, Trägerblech 17 und Befestigungszapfen 16 durch Sinterverfahren als ein einstückiges Bauteil gefertigt werden; Reibelement 5 und Trägerblech 17 können als ein einstückiges Bauteil gefertigt werden, zu welchem der Befestigungszapfen 16 mit Kugelsegment 11 separat besteht. Die Anordnung ist auch verwendbar für organische Beläge. Es ist auch möglich, die Trägerplatten 3 in Abänderung ihrer geometrischen Maße für Bremssattel-Anordnungen zu verwenden. Die in **Fig.5** und **Fig.6** dargestellte Trägerplatte 3 entspricht einer derartigen Ausführungsform zur Verwendung im Schacht eines Bremssattels, wobei die Reibelemente 5 in Abänderung zu den Reibelementen der vorangehend erläuterten Ausführungsform großflächig ausgebildet sind und zusätzliche Mittel, wie den dargestellten Stift 23 zur Lagefixierung aufweisen können.

Zum Aufbringen der Spannfedern 13 auf die Befestigungszapfen 16 der Reibelemente 5 wird ein hier nicht gezeigter Federspreizer verwendet. Die Spannfeder 13 ist mit von ihrem Außenumfang nach innen gebogenen, zusammenlaufenden Schenkeln 41 versehen, wobei am Zusammenlauf der beiden Schenkel 41 ein Spalt besteht, welcher im montierten Zustand unter Verspannung der beiden Schenkel 41 in die Eindrehung 19 des Befestigungszapfen 16 eingreift. Nachdem Aufspreizen der Schenkel 41 durch den Federspreizer lassen sich die beiden Schenkel 41 wieder schließen und nehmen hierbei ihre Montageposition nach **Fig.1** und **Fig.5** in der Eindrehung 19 des Befestigungszapfens 16 ein, so dass mit Hilfe der Spannfeder 13 eine hohe Zugkraft auf den Befestigungszapfen 16 ausgeübt wird und das Reibelement 5 klapperfrei innerhalb des Freiheitsgrades seiner Kugelbeweglichkeit gegenüber der Trägerplatte 3 gehaltert wird.

Die Demontage der Spannfeder 13 durch Aufspreizen des Federmittelteils bzw. der beiden Schenkel 41 kann mit einer einfachen Spreizzange vorgenommen werden, der Austausch der Reibelemente 5 kann demnach sogar in Einbaulage an der Trägerplatte 3 vollzogen werden. Die Trägerplatte 3 ihrerseits wird nicht ausgetauscht, sie ist für mehrfachen Gebrauch vorgesehen, was zu einer kostengünstigen Montage und Bevorratung beiträgt.

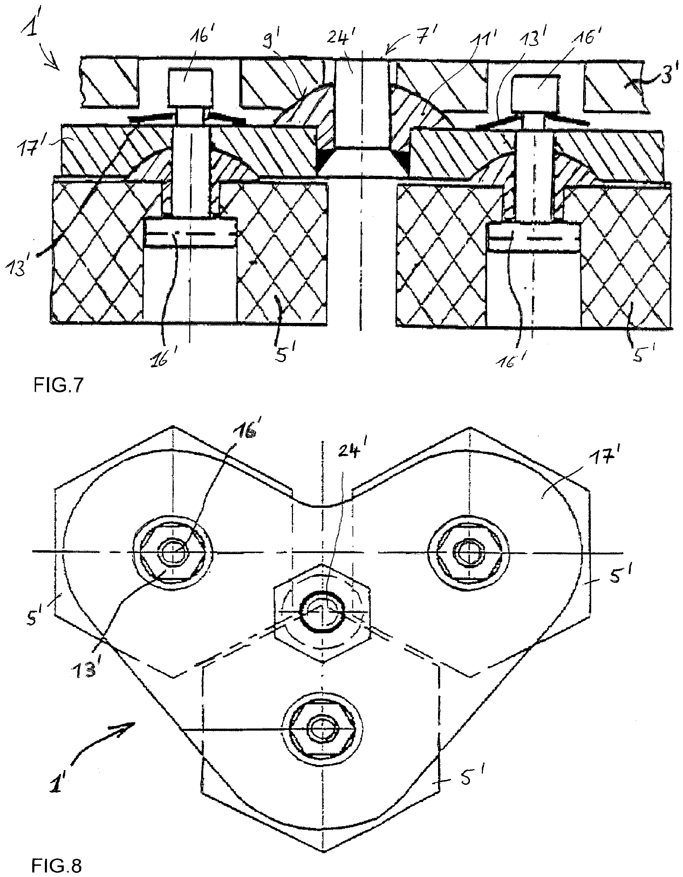

In **Fig.7** und **Fig.8** ist eine zweite Ausführung eines Bremsbelags 1' im Teilschnitt dargestellt, bei dem ebenfalls eine Trägerplatte 3' und Reibelemente 5' aber zusätzlich mehrere Trägerbleche 17' vorgesehen sind, wobei mehrere, hier bevorzugt drei Reibelemente 5' direkt an jeweils einem Trägerblech 17' schwenkbar gehalten sind und mehrere Trägerbleche 17' mit an ihnen schwenkbar gehaltenen Reibelementen 5' mit der Trägerplatte 3' verbunden sind.

Im Einzelnen weisen die Trägerbleche 17' an ihrer von den Reibelementen 5' weg weisenden Rückseite Kugelsegmente 11' auf, welche schwenkbar in Kugelpfannen 9' der Trägerplatte 3' angeordnet sind. Weiterhin weisen die Kugelpfannen 9' der Trägerplatte 3 jeweils eine Bohrung auf, welche in eine Bohrung 7' der Trägerplatte 3' übergeht. In diesen Kugelpfannen 9' sind Kugelsegmente 11' der Trägerbleche 17' angeordnet. Weiterhin erstreckt sich von dem Kugelsegment 11' eines Trägerblechs 17' jeweils ein Zapfen 24', welcher in eine Bohrung 7' der Trägerplatte 3' eingreift. Bevorzugt trägt ein Trägerblech 17' beispielsweise drei Reibelemente 5' und hat hierzu beispielsweise drei sternförmig angeordnete Schenkel, wobei an jedem der Schenkel ein Reibelement 5' aufgenommen ist. Weiterhin weisen die Trägerbleche 17' und Reibelemente 5' wie bei der ersten Ausführung durch Spannfedern 13' spannbare Kugelsegment-/Kugelpfannenpaarungen auf, welche ein Verschwenken der Reibelemente 5' gegenüber den Trägerblechen 17' sowie ein Auswechseln der Reibelemente 5' gestatten. Folglich sind bei der zweiten Ausführung nach **Fig.5** und **Fig.6** die Reibelemente 5' indirekt, nämlich über Trägerbleche 17' mit der Trägerplatte 3' schwenkbar verbunden.

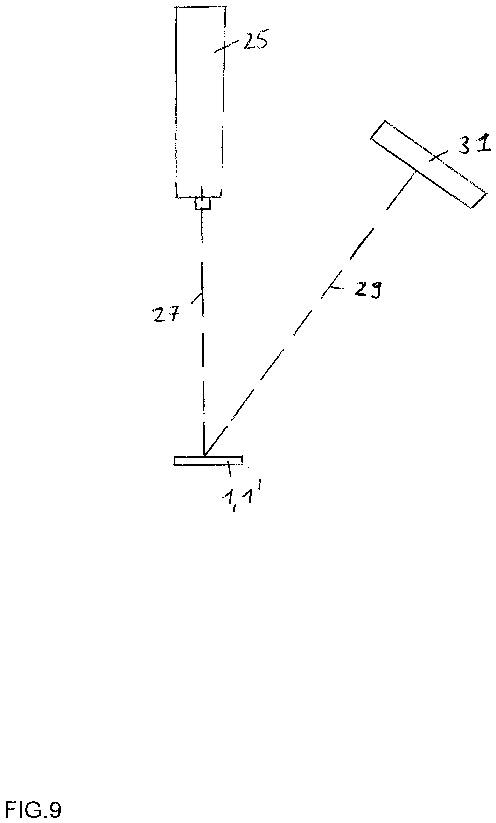

Es wird ein berührungslos arbeitendes optisches Laser-Triangulationsverfahren gemäß **Fig.9** zum Erfassen wenigstens einer geometrischen Eigenschaft von einem oben beschriebenen Bremsbelag 1, 1' und/oder von wenigstens einer Komponente der Komponenten eines oben beschriebenen Bremsbelags 1, 1' vor einer erstmaligen Inbetriebnahme des Bremsbelags 1, 1' in der Scheibenbremse verwendet. Unter Komponenten sollen dabei alle oben beschriebenen, aber auch nicht beschriebene Bauteile und Baugruppen der Bremsbeläge 1, 1' verstanden werden.

Mit dem berührungslos arbeitenden optischen Laser-Triangulationsverfahren werden insbesondere die Art und/oder die Form und/oder die Lage wenigstens einer Komponente der Komponenten eines Bremsbelags 1, 1' erfasst, um beispielsweise durch einen Vergleich mit vorgegebenen und in einem Speicher gespeicherten Sollwerten oder Sollwertbereichen für die Art und/oder die Form und/oder die Lage wenigstens einer Komponente der Komponenten des betrachteten Bremsbelags 1, 1' Fertigungs- und/oder Montagefehler bei dem Bremsbelag 1, 1' zu detektieren.

Ein solcher Fertigungs- und/oder Montagefehler bei dem Bremsbelag 1, 1' kann beispielsweise darin bestehen, dass eine Komponente des Bremsbelags 1, 1' nicht mit den anderen Komponenten für eine gemeinsame Montage vorgesehen ist (Art der Komponente). Weiterhin sind unter geometrische Eigenschaften jegliche Eigenschaften zu verstehen, welche die Form (rund, eckig, zylindrisch, Radien etc.) und/oder die Lage (Fluchtung, Winkel, Abstand etc.) einer oder mehrerer Komponenten in Bezug zu einer anderen Komponente oder zu anderen Komponenten betreffen. Relative geometrische Eigenschaften einer oder mehrerer Komponenten in Bezug zu einer anderen Komponente oder zu anderen Komponenten können insbesondere aus in Bezug zu einer Referenz gewonnenen absoluten geometrischen Eigenschaften ermittelt werden.

Beispielsweise wird bei der ersten Ausführung der **Fig.1** bis **Fig.6** und auch bei der zweiten Ausführung gemäß **Fig.7** und **Fig.8** geprüft, ob es sich bei der Trägerplatte 3, 3' um die Trägerplatte handelt, welche zur Bestückung mit einer bestimmten Art von Reibelementen 5, 5' vorgesehen ist. Weiterhin kann auch bei der zweiten Ausführung gemäß **Fig.7** und **Fig.8** das Niveau der in den Bohrungen 7' der Trägerplatte 3' aufgenommenen Zapfen 24' der Trägerbleche 17' gegenüber der Oberfläche der Trägerplatte 3'sowie auch die Zapfen 24' selbst dahingehend geprüft werden, ob sie Beschädigungen z.B. in Form von Ausbrüchen aufweisen. Bei der ersten Ausführung der **Fig.1** bis **Fig.6** wird beispielsweise auch die Größe des Spalts zwischen den Schenkeln 41 der an den Befestigungszapfen 16 montierten Spannfedern 13 überprüft, weil dies ein Indiz für die korrekte Montage der Spannfedern 13 darstellt. Weiterhin kann auch die Orientierung der an den Befestigungszapfen 16 der Reibelemente 5, 5' montierten Spannfedern 13 festgestellt werden. Darüber hinaus wird bevorzugt auch im nicht montierten Zustand der Reibelemente 5, 5' die Länge von deren Befestigungszapfen 16 vermessen. Die obige Aufzählung der vorgenommenen Messungen hinsichtlich der geometrischen Eigenschaften der Bremsbeläge 1, 1' bzw. von deren Komponenten ist nicht vollständig. Vielmehr kann jegliche geometrische Eigenschaft (Art, Lage, Form) irgendeiner Komponente eines Bremsbelags 1, 1' bestimmt werden.

Bei dem berührungslos arbeitenden optischen Laser-Triangulationsverfahren gemäß **Fig.9** wird mittels eines Lasers 25 ein Lichtpunkt auf den Bremsbelag 1, 1' und/oder auf wenigstens eine Komponente der Komponenten des Bremsbelags 1, 1' in einer Beleuchtungsrichtung 27 projiziert und das vom Bremsbelag 1, 1' und/oder von der wenigstens einen Komponente der Komponenten des Bremsbelags 1, 1' in einer Beobachtungsrichtung 29 reflektierte Licht auf einem Lichtaufnahmeelement 31 abgebildet, wobei basierend auf dem Winkel zwischen Beleuchtungsrichtung 27 und Beobachtungsrichtung 29 durch Triangulation die geometrischen Eigenschaften wie Art und/oder die Form des Bremsbelags 1, 1' und/oder die Art und/oder die Form und/oder die Lage wenigstens einer Komponente der Komponenten des Bremsbelags 1, 1' erfasst wird. Auch kann bei dem Laser-Triangulationsverfahren der Laser-Lichtstrahl zu einem linienförmigen Lichtband, einem sogenannten Lichtschnitt, aufgeweitet werden. Zur Erfassung des reflektierten Lichtes kann dabei ein flächenförmiger Detektor eingesetzt werden, wie beispielsweise eine Videokamera. Die Auswertung erfolgt wiederum unter Zugrundelegung der Triangulation.

### Bezugszeichenliste

- 1, 1': Bremsbelag
- 3, 3': Trägerplatte
- 5, 5': Reibelemente
- 7, 7': Bohrungen
- 9, 9': Kugelpfanne
- 11, 11': Kugelsegmente
- 13, 13': Spannfeder
- 15: Reibbelagteil
- 16, 16': Befestigungszapfen
- 17, 17': Trägerblech
- 19: Eindrehung
- 21: Vertiefung
- 23: Stift
- 24': Zapfen
- 25: Laser
- 27: Beleuchtungsrichtung
- 29: Beobachtungsrichtung
- 31: Lichtaufnahmeelement
- 41: Schenkel

## Patentansprüche

1. Verwendung eines berührungslos arbeitenden optischen Laser-Triangulationsverfahrens zum Erfassen wenigstens einer geometrischen Eigenschaft von wenigstens einer Komponente der Komponenten eines Bremsbelags (1, 1') einer Scheibenbremseinrichtung eines Fahrzeugs vor einer Montage oder einer erstmaligen Inbetriebnahme des Bremsbelags (1, 1') und/oder der wenigstens einen Komponente der Komponenten des Bremsbelags (1, 1') in der Scheibenbremseinrichtung oder im Fahrzeug, wobei
a) bei dem berührungslos arbeitenden optischen Laser-Triangulationsverfahren mittels eines Lasers (25) ein Lichtpunkt auf die wenigstens eine Komponente der Komponenten des Bremsbelags (1, 1') in einer Beleuchtungsrichtung (27) projiziert wird und das von der wenigstens einen Komponente der Komponenten des Bremsbelags (1, 1') in einer Beobachtungsrichtung (29) reflektierte Licht auf einem Lichtaufnahmeelement (31) abgebildet wird, **dadurch gekennzeichnet, dass**
b) basierend auf dem Winkel zwischen Beleuchtungsrichtung (27) und Beobachtungsrichtung (29) durch Triangulation die Art der wenigstens einen Komponente der Komponenten des Bremsbelags (1, 1') erfasst wird, und wobei
c) durch einen Vergleich mit vorgegebenen Sollwerten oder Sollwertbereichen für die Art der wenigstens einen Komponente der Komponenten des Bremsbelags (1, 1') ein Montagefehler bei dem Bremsbelag (1, 1') detektiert wird, welcher darin besteht, dass die wenigstens eine Komponente des Bremsbelags nicht mit den anderen Komponenten des Bremsbelags (1, 1') für eine gemeinsame Montage vorgesehen ist, und wobei
d) im Falle eines detektierten Montagefehlers bei dem Bremsbelag (1, 1') ein Fehlersignal erzeugt wird.

2. Verwendung nach Anspruch 1, **dadurch gekennzeichnet, dass** die Komponenten wenigstens Folgendes aufweisen:
a) gemäß einer ersten Ausführung eine Trägerplatte (3) und mehrere austauschbare Reibelemente (5), wobei die Reibelemente (5) direkt an der Trägerplatte (3) schwenkbar gehalten sind, oder
b) gemäß einer zweiten Ausführung eine Trägerplatte (3), mehrere Trägerbleche (17') und mehrere austauschbare Reibelemente (5'), wobei mehrere Reibelemente (5') direkt an jeweils einem Trägerblech (17') gehalten sind und mehrere Trägerbleche (17') mit an ihnen gehaltenen Reibelementen (5') mit der Trägerplatte (3') verbunden sind.

3. Verwendung nach Anspruch 2, **dadurch gekennzeichnet, dass** bei der ersten Ausführung
a1) die Reibelemente (5) mittels an ihrer Rückseite ausgebildeten Kugelsegmente (11) schwenkbar in einer Kugelpfanne (9) der Trägerplatte (3) angeordnet sind,
a2) die Kugelpfannen (9) eine Bohrung aufweisen, welche in eine Bohrung (7) der Trägerplatte (3) übergeht,
a3) sich von den Kugelsegmenten (11) der Reibelemente (5) Befestigungszapfen (16) erstrecken,
a4) die Befestigungszapfen (16) jeweils eine das Reibelement (5) in Richtung der Kugelpfanne (9) verspannende Spannfeder (13) tragen.

4. Verwendung nach Anspruch 2 oder 3, **dadurch gekennzeichnet, dass** bei der zweiten Ausführung
b1) die Trägerbleche (17') an ihrer von den Reibelementen (5') wegweisenden Rückseite Kugelsegmente (11') aufweist, welche schwenkbar in Kugelpfannen (9') der Trägerplatte (3') angeordnet sind,
b2) die Kugelpfannen (9') der Trägerplatte (3') jeweils eine Bohrung aufweisen, welche in eine Bohrung (7') der Trägerplatte (3') übergeht,
b3) von dem Kugelsegment (11') eines Trägerblechs (17') sich ein Zapfen (24') erstreckt, welcher in die Bohrung (7') der Trägerplatte (3') eingreift.

5. Verwendung nach Anspruch 3 oder 4, **dadurch gekennzeichnet, dass** die wenigstens eine geometrische Eigenschaft der wenigstens einen Komponente der Komponenten des Bremsbelags (1, 1') durch eine der folgenden Eigenschaften gebildet wird: Die Art der Trägerbleche (17') und/oder der Trägerplatte (3, 3') und/oder der Reibelemente (5, 5') und/oder der Befestigungszapfen (16, 16') und/oder der Zapfen (24') und/oder der Spannfedern (13, 13).

6. Verwendung nach einem der vorhergehenden Ansprüche, **dadurch gekennzeichnet, dass** das Erfassen der wenigstens einen geometrischen Eigenschaft der wenigstens einen Komponente der Komponenten des Bremsbelags (1, 1') in einem am Bremsbelag (1, 1') montierten Zustand der Komponente oder in einem Zustand der Komponente vor der Montage am Bremsbelag (1, 1) erfolgt.

## Claims

1. Use of a contactlessly operating optical laser triangulation method for ascertaining at least one geometrical characteristic of at least one component of the components of a brake pad (1, 1') of a disc brake device of a vehicle prior to an installation or an initial commencement of operation of the brake pad (1, 1') and/or of the at least one component of the components of the brake pad (1, 1') in the disc brake device or in the vehicle, wherein
a) in the contactlessly operating optical laser triangulation method, a laser (25) is used to project a spot of light onto the at least one component of the components of the brake pad (1, 1') in an illumination direction (27), and the light reflected by the at least one component of the components of the brake pad (1, 1') in an observation direction (29) is imaged on a light-receiving element (31), **characterized in that**
b) the type of the at least one component of the components of the brake pad (1, 1') is ascertained on the basis of the angle between illumination direction (27) and observation direction (29) by triangulation, and wherein
c) an installation fault in the brake pad (1, 1') is detected by means of a comparison with predefined setpoint values or setpoint value ranges for the type of the at least one component of the components of the brake pad (1, 1'), said installation fault consisting in the at least one component of the brake pad not being intended for installation together with the other components of the brake pad (1, 1'), and wherein
d) a fault signal is generated in the event of an installation fault in the brake pad (1, 1') being detected.

2. Use according to Claim 1, **characterized in that** the components have at least the following:
a) in a first embodiment, a carrier panel (3) and multiple exchangeable friction elements (5), wherein the friction elements (5) are held pivotably directly on the carrier panel (3), or
b) in a second embodiment, a carrier panel (3), multiple carrier plates (17') and multiple exchangeable friction elements (5'), wherein multiple friction elements (5') are held directly on in each case one carrier plate (17'), and multiple carrier plates (17') with friction elements (5') held thereon are connected to the carrier panel (3').

3. Use according to Claim 2, **characterized in that**, in the first embodiment,
a1) the friction elements (5) are, by means of ball segments (11) formed on the rear side thereof, arranged pivotably in a ball socket (9) of the carrier panel (3),
a2) the ball sockets (9) have a bore which transitions into a bore (7) of the carrier panel (3),
a3) fastening pegs (16) extend from the ball segments (11) of the friction elements (5),
a4) the fastening pegs (16) bear in each case one bracing spring (13) which braces the friction element (5) in the direction of the ball socket (9).

4. Use according to Claim 2 or 3, **characterized in that**, in the second embodiment,
b1) the carrier plates (17') have, on their rear side pointing away from the friction elements (5'), ball segments (11') which are arranged pivotably in ball sockets (9') of the carrier panel (3'),
b2) the ball sockets (9') of the carrier panel (3') each have a bore which transitions into a bore (7') of the carrier panel (3'),
b3) from the ball segment (11') of a carrier plate (17') there extends a peg (24') which engages into the bore (7') of the carrier panel (3').

5. Use according to Claim 3 or 4, **characterized in that** the at least one geometrical characteristic of the at least one component of the components of the brake pad (1, 1') is formed by one of the following characteristics: the type of the carrier plates (17') and/or of the carrier panel (3, 3') and/or of the friction elements (5, 5') and/or of the fastening pegs (16, 16') and/or of the pegs (24') and/or of the bracing springs (13, 13).

6. Use according to any of the preceding claims, **characterized in that** the ascertainment of the at least one geometrical characteristic of the at least one component of the components of the brake pad (1, 1') is performed in a state of the component installed on the brake pad (1, 1') or in a state of the component prior to the installation on the brake pad (1, 1).

## Revendications

1. Utilisation d'un procédé de triangulation par laser optique opérant sans contact pour la détection d'au moins une propriété géométrique d'au moins un élément parmi les éléments d'une garniture (1, 1') de frein d'un dispositif de frein à disque d'un véhicule avant un montage ou une mise en service pour la première fois de la garniture (1, 1') de frein et/ou du au moins un élément parmi les éléments de la garniture (1, 1') de frein dans le dispositif de frein à disque ou dans le véhicule, dans lequel
a) dans le procédé de triangulation par laser optique opérant sans contact, au moyen d'un laser (25) on projette un point lumineux sur le au moins un élément parmi les éléments de la garniture (1, 1') de frein dans une direction (27) d'éclairage et on reproduit sur un élément (31) de réception de la lumière la lumière réfléchie dans une direction (29) d'observation par le au moins un élément parmi les éléments de la garniture (1, 1') de frein, **caractérisée en ce que**
b) en se fondant sur l'angle entre la direction (27) d'éclairage et la direction (29) d'observation, on détecte par triangulation le type du au moins un élément parmi les éléments de la garniture (1, 1') de frein et dans lequel
c) dans une comparaison à des valeurs de consigne données à l'avance ou à des plages de valeurs de consigne pour le type du au moins un élément parmi les éléments de la garniture (1, 1') de frein, on détecte un défaut de montage de la garniture (1, 1') de frein, qui consiste **en ce que** le au moins un élément de la garniture de frein n'est pas prévu pour un montage commun avec les autres éléments de la garniture (1, 1') de frein et dans lequel
d) si l'on détecte un défaut de montage de la garniture (1, 1') de frein on produit un signal de défaut.

2. Utilisation suivant la revendication 1, **caractérisée en ce que** les éléments ont au moins ce qui suit :
a) suivant un premier mode de réalisation une plaque (3) de support et plusieurs éléments (5) de friction échangeables, les éléments (5) de friction étant maintenus pivotant directement sur la plaque (3) de support ou
b) suivant un deuxième mode de réalisation une plaque (3) de support, plusieurs tôles (17') de support et plusieurs éléments (5') de friction échangeables, dans lequel plusieurs éléments (5') de friction sont maintenus directement et respectivement une tôle (17') de support et plusieurs tôles (17') de support sont reliés à la plaque (3') de support par des éléments (5') de friction, qui sont maintenus sur celles-ci.

3. Utilisation suivant la revendication 2, **caractérisée en ce que** dans le premier mode de réalisation
a1) les éléments (5) de friction sont, au moyen de segments (11) de bille constitués sur leur face arrière, montés pivotant dans une crapaudine (9) de la plaque (3) de support,
a2) les crapaudines (9) ont un trou, qui se transforme en un trou (7) de la plaque (3) de support,
a3) des tourillons (16) de fixation s'étendent à partir des segments (11) de bille des éléments (5) de friction,
a4) les tourillons (16) de fixation portent chacun un ressort (13) de serrage bloquant l'élément (5) de friction en direction de la crapaudine (9).

4. Utilisation suivant la revendication 2 ou 3, **caractérisée en ce que** dans le deuxième mode de réalisation
b1) la tôle (17') de support a sur sa face arrière s'éloignant des éléments (5) de friction des segments (11') de bille, qui sont montés pivotant dans des crapaudines (9') de la plaque (3') de support,
b2) les crapaudines (9') de la plaque (3') de support ont respectivement un trou, qui se transforme en un trou (7') de la plaque (3') de support,
b3) du segment (11') de bille d'une tôle (17') de support s'étend un tourillon (24',) qui pénètre dans le trou (7') de la plaque (3') de support.

5. Utilisation suivant la revendication 3 ou 4, **caractérisée en ce que** la au moins une propriété géométrique d'au moins un élément parmi les éléments de la garniture (1, 1') de frein est formée de l'une des propriétés suivantes : le type de la tôle (17') de support et/ou de la plaque (3, 3') de support et/ou des éléments, (5, 5') de friction et/ou des tourillons (16, 16') de fixation et/ou des tourillons (24') et/ou des ressorts (13, 13') de serrage.

6. Utilisation suivant l'une des revendications précédentes, **caractérisée en ce que** la détection de la au moins une propriété géométrique d'au moins un élément parmi les éléments de la garniture (1, 1') de frein a lieu dans un état, monté sur la garniture (1, 1') de frein, de l'élément ou dans un état de l'élément avant le montage sur la garniture (1, 1') de frein.
